# EUROPÄISCHE PATENTSCHRIFT

(11) **EP 2 984 127 B1**
(45) Veröffentlichungstag und Bekanntmachung des Hinweises auf die Patenterteilung: **20.12.2017**
(21) Anmeldenummer: 14731535.2
(22) Anmeldetag: 10.04.2014
(51) Int. Cl.: C08J 5/18

(54) **POLYSACCHARIDFILM UND VERFAHREN ZU SEINER HERSTELLUNG**
POLYSACCHARIDE FILM AND METHOD FOR THE PRODUCTION THEREOF
FILM POLYSACCHARIDIQUE ET SON PROCÉDÉ DE FABRICATION

(30) Priorität: 10.04.2013 AT 2792013
(43) Veröffentlichungstag der Anmeldung: 17.02.2016
(73) Patentinhaber: Lenzing AG, 4860 Lenzing (AT)
(72) Erfinder: DÜRNBERGER, Franz, A-4860 Lenzing (AT); SCHWEIGART, Andreas, A-4880 St. Georgen im Attergau (AT); RIEDL, Gerold, A-4870 Pfaffing (AT); REITER, Elisabeth, A-4863 Seewalchen (AT); KRONER, Gert, A-4863 Seewalchen (AT)
(74) Vertreter: Hanemann, Otto
(86) Internationale Anmeldenummer: PCT/AT2014/000076
(87) Internationale Veröffentlichungsnummer: WO 2014/165881

(56) Entgegenhaltungen:
- EP-A2- 0 158 884
- WO-A1-2013/036968
- WO-A1-2013/052730
- US-A- 4 306 059
- US-A- 4 562 020
- US-B1- 7 000 000
- OGAWA K ET AL: "CRYSTAL STRUCTURE OF (1 3)-ALPHA-D-GLUCAN", WATER-SOLUBLE POLYMERS: SYNTHESIS, SOLUTION PROPERTIES AND APPLICATIONS, AMERICAN CHEMICAL SOCIETY, WASHINGTON, DC, US, Nr. 141, 1. Januar 1980 (1980-01-01), Seiten 353-362, XP002936532, ISBN: 978-0-541-23408-9
- Kunal Singha: "Importance of the Phase Diagram in Lyocell Fiber Spinning", International Journal of Materials Engineering, 1. Januar 2012 (2012-01-01), Seiten 10-16, XP055135367, DOI: 10. 5923/j.ijme.20120203.01 Gefunden im Internet: URL:http://article.sapub.org/pdf/10.5923.j .ijme.20120203.01.pdf [gefunden am 2014-08-19] in der Anmeldung erwähnt

## Beschreibung

Die vorliegende Erfindung betrifft ein Verfahren zur Herstellung von Filmen aus Polysacchariden, die als filmbildende Substanz α(1→3)-Glucan enthalten sowie die daraus hergestellten Filme und ihre Verwendung. Die Begriffe "Film" und "Folie" sollen für die Zwecke der vorliegenden Erfindung als gleichbedeutend verwendet werden.

### Stand der Technik

Polysaccharide spielen als Materialien, die aus nachwachsenden Rohstoffen gewonnen werden können, eine immer größere Rolle. Eines der am häufigsten vorkommenden Polysaccharide ist die Cellulose. Baumwollfasern, die fast ausschließlich aus Cellulose bestehen, sind ein Beispiel für die Wichtigkeit von Polysacchariden. Aber auch aus anderen cellulosischen Rohstoffen gewonnene Materialien wie z. B. cellulosische Kunstfasern gewinnen immer mehr an Bedeutung. Neben den Fasern existieren auch andere cellulosische Formkörper; ein Beispiel hierfür ist die Cellophan-Folie. Zurzeit werden cellulosische Folien fast ausschließlich nach dem Cellophanverfahren hergestellt und sind eindimensional verstreckt.

Der Gattungsname "Lyocell-Fasern" wurde von der BISFA (The International Bureau for the Standardization of Man-made Fibers) Cellulosefasern zugeteilt, die aus Lösungen in einem organischen Lösungsmittel ohne Bildung eines Derivats hergestellt werden.

Bis heute hat sich jedoch nur ein Verfahren zur großtechnischen Herstellung von Fasern der Gattung Lyocell durchgesetzt und zwar das Aminoxid-Verfahren. Bei diesem Verfahren wird als Lösungsmittel ein tertiäres Aminoxid verwendet, bevorzugt N-Methylmorpholin-N-oxid (NMMO).

Tertiäre Aminoxide sind schon seit langem als alternative Lösungsmittel für Cellulose bekannt. Aus der US 2,179,181 ist beispielsweise bekannt, dass tertiäre Aminoxide Zellstoff ohne Derivatisierung zu lösen vermögen und dass aus diesen Lösungen cellulosische Formkörper wie z.B. Fasern hergestellt werden können. In der US 3,447,939 werden cyclische Aminoxide als Lösungsmittel für Cellulose beschrieben.

Wie dieses Verfahren ausgeführt wird, ist dem Fachmann grundsätzlich seit längerem aus vielen Patentschriften und sonstigen Publikationen bekannt. So beschreibt unter anderem die EP 356 419 B1 die Lösungsherstellung und die EP 584 318 B1 das Verspinnen solcher Lösungen von Cellulose in wasserhaltigen tertiären Aminoxiden zu Fasern. Die DE 10261496 A1 beschreibt die Herstellung von cellulosischen Flachfolien aus solchen Lösungen, während die WO 00/23250 A1 die Herstellung von cellulosischen Blasfolien aus vergleichbaren Lösungen beschreibt.

Cellulosefolien, die nach dem Aminoxid-Verfahren hergestellt werden, weisen gegenüber Cellophan deutliche Produktvorteile auf: Sie besitzen eine hohe Festigkeit in Längs- und Querrichtung und sind in Abhängigkeit von ihrer Herstellung isotrop oder anisotrop.

Die DE 10035798 A1 beschreibt die Herstellung von cellulosischen Schlauchfolien nach dem Aminoxid-Verfahren. Sie nennt in der Beschreibung (Sp. 5, Z. 13) als mögliche NMMO-Konzentration 50 - 95 Gew.-%, insbesondere 70 - 80 Gew.-%. In sämtlichen Beispielen der DE 10035798 A1 wird - wie auch in allen sonstigen Publikationen zu diesem Thema - in konkreten Beispielen stets eine Celluloselösung mit NMMO-Monohydrat (87 Gew.-% NMMO) als Lösungsmittel verwendet. Mit Cellulose als Polysaccharid sind andere Lösungszusammensetzungen, also solche mit höheren Wassergehalten schlicht nicht verarbeitbar. Üblicherweise wird zur Anmaischung der Cellulose vor dem Lösen eine wässrige NMMO-Lösung mit höherem Wassergehalt eingesetzt und während des Lösevorgangs im Löseaggregat das überschüssige Wasser durch Anlegen von Unterdruck verdampft. Dieses Verdampfen benötigt sehr viel Energie und Investitionen für die Vakuumerzeugungsanlage.

Auch die DE 10029044 A1 beschreibt die Herstellung von cellulosischen Formkörpern, unter anderem Fasern und Folien, nach dem Aminoxid-Verfahren. Die Spinnlösung kann beispielsweise in einem Filmtruder oder LIST-Discotherm-Kneter unter gleichzeitiger Abdampfung von Wasser hergestellt werden. Auch hier soll der Wassergehalt der fertigen Spinnlösung vor der Extrusion 11 Gew.-%, bezogen auf die Gesamtmenge der Spinnlösung, sein. Auch hier ist sehr viel Verdampfungsenergie erforderlich.

Selbst jüngste wissenschaftliche Veröffentlichungen kommen zu keiner anderen Erkenntnis. Singha, International Journal of Materials Engineering 2012, 2(3): 10-16, beschreibt für die Auflösung von Cellulose in wässrigem NMMO ausführlich mittels eines Lösediagramms, dass sich bei einem Wassergehalt von mehr als ca. 22 Gew.-% im Gesamtsystem Cellulose nicht löst.

Der im Aminoxid-Verfahren hauptsächlich verwendete cellulosische Rohstoff ist Zellstoff, der aus Holz gewonnen wird. Die im Holz, wie auch in anderen pflanzlichen Cellulosequellen wie Baumwoll-Linters, Stroh, etc. vorliegenden Cellulosemoleküle sind sehr langkettig, d. h. sie weisen einen hohen Polymerisationsgrad auf. Um eine großtechnisch gut verarbeitbare Cellulosespinnlösung zu erhalten, muss der Polymerisationsgrad der Cellulosemoleküle gezielt eingestellt werden, wobei zwangsläufig ein Teil der Polymermoleküle verkürzt werden. Dies geschieht in den üblichen Zellstoffherstellungsverfahren sowie auch in separaten Vorbehandlungsstufen wie Bleichen, Säurebehandlung oder Bestrahlung durch eine Spaltung der ursprünglich langen Cellulosemoleküle. Neben den kürzeren Ketten mit dem angestrebten Polymerisationsgrad entstehen dabei aber auch noch wesentlich kürzere Bruchstücke wie Oligomere oder sogar Monomere, die spätestens beim Ausfällen der Spinnlösung im Fällbad in Lösung bleiben, nicht zur Faserbildung beitragen und damit verloren gehen. Die auf diesem Weg eintretenden Rohstoffverluste können erheblich sein und die Wirtschaftlichkeit des gesamten Aminoxid-Verfahrens beeinträchtigen.

Die US 7,000,000 beschreibt Fasern, die durch Verspinnen einer Lösung von Polysacchariden, die im Wesentlichen aus Hexose-Wiederholungseinheiten bestehen, die über α(1→3)-glycosidische Bindungen verknüpft sind, hergestellt werden. Diese Polysaccharide können hergestellt werden, indem eine wässrige Lösung von Saccharose mit GtfJ Glucosyltransferase, isoliert aus Streptococcus salivarius, in Kontakt gebracht wird (Simpson et al. Microbiology, vol 141, pp 1451-1460 (1995)). "Im Wesentlichen" bedeutet in diesem Zusammenhang, dass innerhalb der Polysaccharidketten vereinzelt Fehlstellen auftreten können, an denen andere Bindungskonfigurationen auftreten. Diese Polysaccharide sollen für die Zwecke der vorliegenden Erfindung als "α(1→3)-Glucan" bezeichnet werden.
Die US 7,000,000 offenbart zunächst Möglichkeiten zur enzymatischen Herstellung von α(1→3)-Glucan aus Monosacchariden. Auf diese Weise können relativ kurzkettige Polysaccharide ohne Verlust an Monomerbausteinen hergestellt werden, da die Polymerketten aus den Monomerbausteinen aufgebaut werden. Im Gegensatz zur Herstellung kurzkettiger Cellulosemoleküle ist die Herstellung von α(1→3)-Glucan umso preisgünstiger, je kürzer die Polymerketten sind, da dann nur eine geringe Verweilzeit in den Reaktoren notwendig ist.
Gemäß der US 7,000,000 soll das α(1→3)-Glucan derivatisiert, bevorzugt acetyliert, werden. Das Lösungsmittel ist bevorzugt eine organische Säure, eine organische Halogenverbindung, ein fluorierter Alkohol oder eine Mischung aus solchen Komponenten. Diese Lösungsmittel sind teuer und aufwendig zu regenerieren.

WO 2013/036968 offenbart α(1->3)-Glucan, das in der gleichen Weise hergestellt wurde wie in der vorliegenden Erfindung beschrieben, nennt aber die Möglichkeit der Herstellung von Filmen daraus nur pauschal in einer Aufzählung. In welcher Weise derartige Filme hergestellt werden können, offenbart WO 2013/036968 nicht.

OGAWA K ET AL, AMERICAN CHEMICAL SOCIETY, Nr. 141, 1. Januar 1980, Seiten 353-362, XP002936532 offenbart α(1->3)-Glucan, das mit einem Enzym hergestellt wurde, das wie in der vorliegenden Erfindung beschrieben aus Streptococcus salivarius gewonnen wurde, stellt aber fest, daß die Herstellung von Filmen direkt aus der underivatisierten Glucan nicht möglich ist, sondern nur über den sehr aufwendigen Umweg über eine chemische Derivatisierung und anschließende chemische Regeneration gelingt. Die Orientierung erfolgt dabei teilweise im derivatisierten Zustand, teilweise nach der Regeneration in einem Überdruckbehälter mit Wasserdampf bei 140°C. Es wurde daher versucht, α(1→3)-Glucane anstelle von Cellulose in einem Aminoxid-Verfahren unter großtechnisch kommerziell angewendeten Verfahrensbedingungen zur Herstellung von Polysaccharidfasern einzusetzen. Leider zeigte sich, dass sich unter diesen Bedingungen α(1→3)-Glucane nicht zufriedenstellend zu Fasern verarbeiten ließen. Insbesondere trat sehr häufig ein Verkleben der Einzelfasern auf, wodurch sie unverkäuflich sind.

### Aufgabe

Die Aufgabe bestand gegenüber diesem Stand der Technik darin, Polysaccharid-Filme sowie ein Verfahren zu deren Herstellung zur Verfügung zu stellen, die nicht die oben genannten Nachteile aufweisen. Insbesondere sollte das Herstellungsverfahren im Vergleich zur Herstellung von Cellulose-Filmen nach dem Aminoxid-Verfahren wirtschaftlicher durchführbar sein.

### Beschreibung der Erfindung

Die Lösung der oben beschriebenen Aufgabe besteht in einem Verfahren zur Herstellung eines Polysaccharid-Films, in dem die fertige Spinnlösung für die Extrusion ein Aminoxid, mindestens 23 Gew.-%, bevorzugt mindestens 26 Gew.-% Wasser, bezogen auf die Gesamtmenge der Spinnlösung, und als Polysaccharid α(1→3)-Glucan enthält. Dadurch kann auf den Einsatz eines kombinierten Eindampf- und Löseaggregats, z.B. eines Filmtruders oder Dickschichtkneters (LIST Discotherm oder ähnliche) verzichtet werden.

Die Begriffe "Film" und "Folie" sollen für die Zwecke der vorliegenden Erfindung als gleichbedeutend verwendet werden.

Das Verfahren zur Herstellung des erfindungsgemäßen Films besteht aus folgenden Schritten:
1. Herstellung einer Spinnlösung enthaltend wässriges Aminoxid sowie α(1→3)-Glucan. Hierfür kommen die grundsätzlich für die Herstellung von Cellulose-Aminoxid-Lösungen bekannten, oben genannten Methoden in Frage.:
2. Extrudieren der Spinnlösung durch eine Düse über einen Luftspalt unter Verstreckung in ein wässriges Aminoxid enthaltendes Spinnbad, Wäsche des regenerierten Films zur Entfernung von Aminoxid und Trocknung.

Die Konzentration des α(1→3)-Glucans Substanz in der Spinnlösung kann zwischen 5 und 20 Gew.-% betragen, bevorzugt sind 8 bis 15 Gew.-%.

Bevorzugt ist das Aminoxid N-Methylmorpholin-N-oxid.

Das erfindungsgemäß eingesetzte α(1→3)-Glucan kann hergestellt werden, indem eine wässrige Lösung von Saccharose mit GtfJ Glucosyltransferase isoliert aus Streptococcus salivarius in Kontakt gebracht wird (Simpson et al. Microbiology, vol 41, pp 1451-1460 (1995)).

In einer bevorzugten Ausführungsform des erfindungsgemäßen Verfahrens besteht das α(1→3)-Glucan zu mindestens 90 % aus Hexose-Einheiten und mindestens 50 % der Hexose-Einheiten sind durch α(1→3)-glycosidische Bindungen verknüpft.

Der Polymerisationsgrad des im erfindungsgemäßen Verfahren eingesetzten α(1→3) Glucans, ausgedrückt als Gewichtsmittel DPw, kann zwischen 200 und 2000 liegen; bevorzugt sind Werte zwischen 500 und 1000.

Überraschend konnte zudem festgestellt werden, dass das erfindungsgemäße Verfahren nicht nur den Einsatz von trockenem α(1→3)-Glucan erlaubt. Auch der Einsatz von wasserhaltigem, insbesondere initialfeuchtem α(1→3)-Glucan, das nach seiner Herstellung nie getrocknet wurde, ist möglich. In dieser Verfahrensvariante muß lediglich der Wassergehalt des zuzugebenden Aminoxids entsprechend angepasst werden. Dies verringert die insgesamt für die Verdampfung von Wasser aufzuwendende Energie weiter. Diese Variante ist insbesondere wirtschaftlich interessant, wenn die Anlage zur Herstellung des α(1→3)-Glucans direkt benachbart zur Produktionsanlage des erfindungsgemäßen Films ist.

Die Extrusion bzw. Formgebung der erfindungsgemäßen Spinnmasse kann mittels grundsätzlich bekannter Verfahren erfolgen: Entweder in einem Flachfolienverfahren mittels einer geraden Schlitzdüse oder mittels einer Ringschlitzdüse in einem Schlauchfolienverfahren, wie es z. B. aus WO 98/42492 A2 bekannt ist oder in einem Blasfolienverfahren, bekannt z.B. aus WO 95/35340 A1 oder WO 00/23250 A1.

Typischerweise wird die Spinnlösung nach der Extrusion verstreckt. Dies kann entweder nur in eine Richtung, d. h. axial, oder aber sowohl in Maschinenrichtung als auch quer dazu, d. h. biaxial erfolgen. Die entsprechende Verstreckung wird vorzugsweise im Luftspalt vor Eintritt in das Spinnbad durchgeführt.

Gegenstand der vorliegenden Erfindung ist auch ein Polysaccharid-Film, deren filmbildende Substanz im Wesentlichen aus α(1→3)-Glucan besteht,dadurch gekennzeichnet, dass das α(1->3)-Glucan mittels GtfJ Glucosyltransferase hergestellt wurde, die aus Streptococcus salivarius isoliert worden war und dass der Film zumindest in einer Dimension orientiert ist. In einer bevorzugten Ausführungsform besteht das α(1→3)-Glucan zu mindestens 90 % aus Hexose-Einheiten und mindestens 50 % der Hexose-Einheiten sind durch α(1→3)-glycosidische Bindungen verknüpft.
Der Polymerisationsgrad des im erfindungsgemäßen Verfahren eingesetzten α(1→3) Glucans, ausgedrückt als Gewichtsmittel DPw, kann zwischen 200 und 2000 liegen; bevorzugt sind Werte zwischen 500 und 1000.

In einer bevorzugten Ausführungsform ist der erfindungsgemäße Polysaccharid-Film in zwei Dimensionen senkrecht zueinander orientiert. Die Orientierung wird durch eine entsprechende Verstreckung, vorzugsweise im Luftspalt vor Eintritt in das Spinnbad durchgeführt.
Im Folgenden wird die Erfindung anhand von Beispielen beschrieben. Die Erfindung ist jedoch ausdrücklich nicht auf diese Beispiele beschränkt, sondern umfasst auch alle anderen Ausführungsformen, die auf dem gleichen erfinderischen Konzept beruhen.

### Beispiele

Die Prozentangaben sind im Folgenden jeweils als Gew.-% angegeben, falls nichts anderes angegeben ist.

### Beispiel 1

Das α(1→3)-Glucan wird zuerst in 50%igem wässrigem NMMO suspendiert und danach mit 78% NMMO zu einer Spinnlösung mit 10% α(1→3)-Glucan, 29,9% Wasser, 60% NMMO und 0,1% Propylgallat als Stabilisierungsmittel umgesetzt. Das Propylgallat wurde in 2155 g 50%igem wässrigem NMMO eingerührt, danach wurden langsam 567 g α(1→3)-Glucan eingemischt und 15 min mit einem Ultraturrax® T50 gerührt, zu dieser Suspension 2559g 78%iges wässriges NMMO zugesetzt und 106 g Wasser abgezogen.

Die Spinnlösung wurde bei 100 °C durch eine 60 mm lange Filmdüse mit einem 350µm breiten Spalt mit einem Ausstoß von 26,9g/min Spinnmasse extrudiert, ein Verzug von 1:2 aufgebracht, in einem Fällbad koaguliert, mit Wasser NMMO frei gewaschen, getrocknet und aufgewickelt.

Der hergestellte Film wies folgende Eigenschaften auf: Foliendicke: 11 um, Festigkeit längs: 87 Mpa, Festigkeit quer: 41 Mpa, Reißdehnung längs: 5,2 %.

### Beispiel 2 (Vergleichsbeispiel):

Zellstoff wird mit 78%igem wässrigem NMMO zu einer Spinnlösung mit 10% Cellulose, 11,9% Wasser, 78% NMMO und 0,1% Propylgallat als Stabilisierungsmittel umgesetzt.

Das GPE wurde in 5000 g 78%igem wässrigem NMMO eingerührt, danach wurden 532 g Cellulose eingemischt und dieser Suspension anschließend bei unter Vakuum 532 g Wasser entzogen.

Die Spinnlösung wurde bei 100 °C durch eine 60 mm lange Filmdüse mit 350 µm breitem Spalt extrudiert, ein Verzug von 1:2 aufgebracht, der Formkörper in einem Fällbad koaguliert, mit Wasser NMMO-frei gewaschen, getrocknet und aufgewickelt.

Der hergestellte Film wies folgende Eigenschaften auf: Foliendicke: 11 um, Festigkeit längs: 173 Mpa, Festigkeit quer: 84 Mpa, Reißdehnung längs: 7,1 %.

## Patentansprüche

1. Verfahren zur Herstellung eines Polysaccharid-Films, **dadurch gekennzeichnet, dass** die fertige Spinnlösung für die Extrusion ein Aminoxid, mindestens 23 Gew.-% Wasser, bezogen auf die Gesamtmenge der Spinnlösung, und als Polysaccharid α(1→3)-Glucan enthält.

2. Verfahren nach Anspruch 1, wobei das Aminoxid N-Methylmorpholin-N-oxid ist.

3. Verfahren nach Anspruch 1, wobei das α(1→3)-Glucan zu mindestens 90 % aus Hexose-Einheiten besteht und mindestens 50 % der Hexose-Einheiten durch α(1→3)-glycosidische Bindungen verknüpft sind.

4. Verfahren nach Anspruch 1, wobei die Extrusion mittels einer geraden Schlitzdüse oder einer Ringschlitzdüse erfolgt.

5. Verfahren nach Anspruch 1, wobei die Spinnlösung nach der Extrusion verstreckt wird.

6. Polysaccharid-Film, deren filmbildende Substanz im Wesentlichen aus α(1→3)-Glucan besteht, **dadurch gekennzeichnet, dass** das α(1→3)-Glucan mittels GtfJ Glucosyltransferase hergestellt wurde, die aus Streptococcus salivarius isoliert worden war und dass der Film zumindest in einer Dimension orientiert ist.

7. Polysaccharid-Film nach Anspruch 6, wobei das α(1→3)-Glucan zu mindestens 90 % aus Hexose-Einheiten besteht und mindestens 50 % der Hexose-Einheiten durch α(1→3)-glycosidische Bindungen verknüpft sind.

## Claims

1. A method for the production of a polysaccharide film, **characterized in that** the finished spinning solution for the extrusion contains an amine oxide, at least 23% by weight of water, related to the total quantity of the spinning solution, and, as a polysaccharide, α(1→3)-glucan.

2. The method as claimed in claim 1, wherein the amine oxide is N-methylmorpholine-N-oxide.

3. The method as claimed in claim 1, wherein at least 90% of the α(1→3)-glucan consist of hexose units and at least 50% of the hexose units are linked via α(1→3)-glycosidic bonds.

4. The method as claimed in claim 1, wherein the extrusion is carried out by means of a straight slot die or an annular slot die.

5. The method as claimed in claim 1, wherein the spinning solution is stretched following the extrusion.

6. A polysaccharide film whose film-forming substance consists substantially of α(1→3)-glucan, **characterized in that** the α(1→3)-glucan was prepared by means of GtfJ glucosyltransferase isolated from *Streptococcus salivarius* and that the film is oriented at least in one dimension.

7. The polysaccharide film as claimed in claim 6, wherein at least 90% of the α(1→3)-glucan consist of hexose units and at least 50% of the hexose units are linked via α(1→3)-glycosidic bonds.

## Revendications

1. Procédé de fabrication d'un film de polysaccharide, **caractérisé en ce que** la solution à filer finie destinée à l'extrusion contienne un oxyde d'amine, au moins 23 % d'eau en masse, rapportée à la quantité totale de solution à filer, et comme polysaccharide, du α(1→3)-glucane.

2. Procédé selon la revendication 1, l'oxyde d'amine étant du N-oxyde de N-méthylmorpholine.

3. Procédé selon la revendication 1, le α(1→3)-glucane étant constitué au moins à 90 % d'unités d'hexose, et au moins 50 % des unités d'hexose étant liées par des liaisons glycosidiques en α(1→3).

4. Procédé selon la revendication 1, l'extrusion se faisant au moyen d'une filière à fente droite ou annulaire.

5. Procédé selon la revendication 1, la solution à filer étant étirée après l'extrusion.

6. Film de polysaccharide dont la substance filmogène est essentiellement constituée de α(1→3)-glucane, **caractérisé en ce que** le α(1→3)-glucane a été fabriqué au moyen de glucosyltransférase gtfj préalablement isolée de Streptococcus salivarius, et **en ce que** le film est au moins orienté dans une dimension.

7. Film de polysaccharide selon la revendication 6, le α(1→3)-glucane étant constitué au moins à 90 % d'unités d'hexose, et au moins 50 % des unités d'hexose étant liées par des liaisons glycosidiques en α(1→3).
